# EUROPÄISCHE PATENTSCHRIFT

(11) **EP 0 586 985 B1**
(45) Veröffentlichungstag und Bekanntmachung des Hinweises auf die Patenterteilung: **18.12.1996**
(21) Anmeldenummer: 93113717.8
(22) Anmeldetag: 27.08.1993
(51) Int. Cl.: C08L 77/00, C08L 71/12, C08K 13/02

(54) **Stabilisierte Polyamid/Polyphenylenetherformmassen**
Stabilized Polyamide/Polyphenylene ether mouldings
Masses à mouler polyamide/polyphenylène éther stabilisées

(30) Priorität: 04.09.1992 DE 4229622
(43) Veröffentlichungstag der Anmeldung: 16.03.1994
(73) Patentinhaber: BASF Aktiengesellschaft, 67063 Ludwigshafen (DE)
(72) Erfinder: Gottschalk, Axel, Dr., D-6730 Neustadt (DE); Goetz, Walter, Dr., D-6700 Ludwigshafen (DE); Muehlbach, Klaus, Dr., D-6718 Gruenstadt (DE); Steiert, Peter, Dr., D-6700 Ludwigshafen (DE); Vogel, Wilfried, Dr., D-6701 Dannstadt-Schauernheim (DE)

(56) Entgegenhaltungen:
- EP-A- 0 522 307
- DATABASE WPI Week 7511, Derwent Publications Ltd., London, GB; AN 75-17518W & CA-A-963 594 (FIBER INDUSTRIES) 25. Februar 1975
- PATENT ABSTRACTS OF JAPAN vol. 012, no. 501 (C-556)27. Dezember 1988 & JP-A-63 213 559 (TORAY) 6. September 1988
- PATENT ABSTRACTS OF JAPAN vol. 013, no. 472 (C-647)25. Oktober 1989 & JP-A-01 185 364 (JAPAN SYNTHETIC RUBBER) 24. Juli 1989
- PATENT ABSTRACTS OF JAPAN vol. 013, no. 224 (C-599)24. Mai 1989 & JP-A-01 036 646 (MITSUBISHI) 7. Februar 1989
- DATABASE WPI Week 7511, Derwent Publications Ltd., London, GB; AN 75-17518W
- PATENT ABSTRACTS OF JAPAN vol. 012, no. 501 (C-556)27. Dezember 1988 & JP-A-63 213 559
- PATENT ABSTRACTS OF JAPAN vol. 013, no. 472 (C-647)25. Oktober 1989 & JP-A-01 185 364
- PATENT ABSTRACTS OF JAPAN vol. 013, no. 224 (C-599)24. Mai 1989 & JP-A-01 036 646

## Beschreibung

Die Erfindung betrifft thermoplastische Formmassen, enthaltend
A) 15 - 84Gew.-% eines thermoplastischen Polyamids
B) 15 - 84 Gew.-% eines durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifizierten Polyphenylenethers
C) 0,1 - 2 Gew.-% mindestens eines aromatischen, sekundären Amins,
D) 0,001 - 0,5 Gew.-% mindestens einer phosphorhaltigen anorganischen Säure oder deren Derivate,
E) 0 - 30 Gew.-% eines schlagzähmodifizierenden Polymeren,
F) 0 - 50 Gew.-% eines faser- oder teilchenförmigen Füllstoffes oder deren Mischungen
G) 0 - 20 Gew.-% eines Flammschutzmittels.

Darüber hinaus betrifft die Erfindung die Verwendung derartiger Formmassen zur Herstellung von Formkörpern jeglicher Art und die aus diesen Formmassen erhältlichen Formkörper.

Blends aus Polyamiden mit Polyphenylenethern weisen im allgemeinen gute Gebrauchseigenschaften auf, wenn eine ausreichende Phasenhaftung der beiden Polymerkomponenten gegeben ist.

Die Stabilisierung von PA/PPE Blends gegen oxydativen und thermischen Abbau bestimmt im weiten Maße die Anwendungsmöglichkeiten dieser Polymerblends.

Aus der Literatur sind folgende Stabilisatoren oder Stabilisatorsysteme für PA/PPE Blends bekannt:
(1) Thioether/sterisch gehinderte Phenole gemäß EP-A-248 526
(2) Kupfersalze gemäß EP-A-310 924
(3) Mercaptoverbindungen gemäß EP-A-329 555
(4) Metallstearate oder -amide gemäß EP-A-395 994

Nachteile dieser bekannten stabilisierten Formmassen sind eine gelbliche Färbung der Blendformkörper und Geruchsbildung bei der Verarbeitung ((1) und (3)). Bei Stabilisatoren auf Kupfersalzbasis (2) ist die Eignung für PA gut, für PPE jedoch gering.

Ferner führen Stabilisatoren gemäß (4) meist zu einem Abbau der Polymermatrix, insbesondere beim Polyamid.

In der jüngeren EP-A 522 307 werden für Blends aus teilaromatischen Polyamiden mit Polyarylethern (nicht funktionalisiert) Stabilisatoren auf Basis von Aminen und phosphorhaltigen Säuren oder deren Derivaten vorgeschlagen (Dokument gemäß Art. 54(3)).

Weiterhin ist aus der CA-A 963 594 für teilkristalline aliphatische Polyamide (ohne PPE) eine Stabilisatorkombination aus einem aromatischen Amin und einer phosphorhaltigen Verbindung bekannt.

Die Verarbeitung des Blends aus PPE/PA erfordert wesentlich höhere Temperaturen, so daß Stabilisatoren, welche für Polyamid verwendbar sind, nicht zwangsläufig in diesem Blend verarbeitbar sind und die gewünschte Stabilisatorwirkung zeigen (ohne daß sich das Additiv z.B. bei der Einarbeitung zersetzt).

In der älteren EP-Anmeldung 92 105 178 wird diese Stabilisatorkombination für teilaromatische Copolyamide (ohne PPE) vorgeschlagen.

Aufgabe der vorliegenden Erfindung war es daher, thermoplastische Formmassen auf Basis von Polyamiden und Polyphenylenethern zur Verfügung zu stellen, die eine verbesserte Wärmealterungsbeständigkeit und Thermooxidationsbeständigkeit aufweisen.

Demgemäß wurden die eingangs definierten Formmassen gefunden. Derartige Formmassen dieser Art sind den Unteransprüchen zu entnehmen.

Die als Komponente A) in den Massen enthaltenen Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von w-Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner das Amid der Poly-11-aminoundecansäure und ein Polyamid aus Di(p-aminocyclohexyl)-methan und Dodecandisäure.

Es ist auch möglich, gemäß der Erfindung Polyamide zu verwenden, die durch Copolykondensation von zwei oder mehr der obengenannten Monomeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Bevorzugte derartige teilaromatische Copolyamide enthalten als Komponente a₁) Einheiten, die sich von Terephthalsäure und Hexamethylendiamin ableiten. Ein geringer Anteil der Terephthalsäure, vorzugsweise nicht mehr als 30 Gew.-% der gesamten eingesetzten aromatischen Dicarbonsäure kann durch Isophthalsäure oder andere aromatische Dicarbonsäuren, vorzugsweise solche, in denen die Carboxylgruppen in para-Stellung stehen, ersetzt werden.

Besonders bevorzugt werden teilaromatische Copolyamide, die neben Einheiten a₁), die sich von Terephthalsäure und Hexamethylendiamin ableiten, Einheiten, die sich von e-Caprolactam ableiten (a₂), und/oder Einheiten, die sich von Adipinsäure und Hexamethylendiamin (a₃) ableiten, enthalten.

Der Anteil an Einheiten die sich von e-Caprolactam ableiten, beträgt in solchen Polyamiden üblicherweise bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, üblicherweise bis zu 60 Gew.-%, vorzugsweise 30 bis 60 Gew.-% und insbesondere 35 bis 55 Gew.-% beträgt.

Derartige Copolyamide können auch sowohl Einheiten von £-Caprolactam als auch Einheiten von Adipinsäure und Hexamethylendiamin enthalten. In diesem Fall ist es vorteilhaft, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten a₁)) und 20 bis 50, vorzugsweise 25 bis 40 Gew.-% Einheiten, die sich von e-Caprolactam ableiten (Einheiten a₂)), erwiesen.

Die Herstellung derartiger teilaromatischer Copolyamide kann z.B. nach dem in den EP-A-129 195 und EP 129 196 beschriebenen Verfahren erfolgen.

Bevorzugt werden lineare Polyamide mit einem Schmelzpunkt von über 200°C.

Die Schmelzpunkte der teilaromatischen Copolyamide liegen im Bereich von 270 bis 325°C, bevorzugt 280 bis 310°C, wobei dieser hohe Schmelzpunkt auch mit einer hohen Glasübergangstemperatur von in der Regel mehr als 75°C, insbesondere mehr als 85°C (im trockenen Zustand) verbunden ist.

Bevorzugte Polyamide sind Polyhexamethylenadipinsäureamid, Polyhexamethylensebacinsäureamid und Polycaprolactam sowie Polyamid 6/6T (Copolyamid aus Caprolactam, Hexamethylendiamin/Terephthalsäure) und Polyamid 66/6T (Copolyamid aus Hexamethylendiamin/Adipinsäure/Terephthalsäure).

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Die Polyamide A) weisen im allgemeinen eine relative Viskosität von 2 bis 5 dl/g auf, bestimmt an einer 1 gew.-%igen Lösung in 96 %iger Schwefelsäure bei 23°C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Der Anteil der Polyamide A) an den erfindungsgemäßen Formmassen beträgt 15 bis 84, vorzugsweise 30 bis 65 und insbesondere 35 bis 60 Gew.-%.

Als Komponente B) enthalten die erfindungsgemäßen Formmassen 15 bis 84, bevorzugt 30 bis 65 und insbesondere 35 bis 60 Gew.-% eines durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactan- oder Halogenbenzylgruppe modifizierten Polyphenylenethers, welcher gegebenenfalls bis zu 50 Gew.-%, bezogen auf B) durch ein vinylaromatisches Polymer ersetzt sein kann.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität (η_{red}) von 0,2 bis 0,9 dl/g, vorzugsweise von 0,35 bis 0,8 und insbesondere 0,45 bis 0,6, gemessen in einer 0,5 gew.-%igen Lösung in Chloroform bei 25'C nach DIN 53 726.

Geeignete Polyphenylenether b₁) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/ oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-di-chlor-1,4-phenylenether), Poly(2-methyl-6-phenyl-1,4-phenylenether, Poly-(2,6-dibenzyl-1,4-phenylen)ether, Poly(2-ethoxi-1,4-phenylenether), Poly-(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-di-propyl-1,4-phenylenether) und Poly(2-ethyl-6-propyl-1,4-phenylenether).

Weiterhin sind Pfropfcopolymere aus Polyphenylenether und vinylaromatischen Polymeren wie Styrol, a-Methylstyrol, Vinyltoluol und Chlorstyrol geeignet.

Funktionalisierte oder modifizierte Polyphenylenether sind z.B. aus WO-A 86/02086, WO-A 87/00540, EP-A 222 246, EP-A-223 116 und EP-A 254 048 bekannt.

Üblicherweise wird bei deren Herstellung ein Polyphenylenether b₁) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine bessere Verträglichkeit mit dem Polyamid erreicht wird.

Die Modifizierung wird im allgemeinen durch Umsetzung eines Polyphenylenethers b₁) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Bevorzugt wird in den erfindungsgemäßen Formmassen als Komponente B) ein modifizierter Polyphenylenether eingesetzt, der durch Umsetzung von
b₁) 70 - 99,95, vorzugsweise 75 - 95 Gew.-%, eines unmodifizierten Polyphenylenethers,
b₂) 0 - 29,95, vorzugsweise 4,89 - 20 Gew.-%, eines vinylaromatischen Polymeren,
b₃) 0,05 - 30, vorzugsweise 0,1 - 5 Gew.-%, mindestens einer Verbindung aus der Gruppe gebildet aus
   b₃₁) α,ß-ungesättigten Dicarbonylverbindungen,
   b₃₂) Amid-Gruppen enthaltenden Monomeren mit einer polymerisierbaren Doppelbindung und
   b₃₃) Lactam-Gruppen enthaltenden Monomeren mit einer polymerisierbaren Doppelbindung,
b₄) 0 - 5, vorzugsweise 0,01 - 0,09 Gew.-%, eines Radikalstarters
wobei sich die Gewichtsprozente auf die Summe von b₁) bis b₄) beziehen, in geeigneten Misch- und Knetaggregaten wie Zweischnekkenextrudern erhältlich ist. Die Verweilzeit liegt dabei vorzugsweise im Bereich von 0,5 bis 15 Minuten bei Temperaturen von 240 bis 375°C.

Das vinylaromatische Polymer b₂) ist vorzugsweise mit dem eingesetzten Polyphenylenether verträglich.

Das Molekulargewicht dieser an sich bekannten und im Handel erhältlichen Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere b₂) sind der bereits erwähnten Monographie von Olabisi, S. 224 bis 230 und 245 zu entnehmen. Nur stellvertretend seien hier vinylaromatische Polymere aus Styrol, Chlorstyrol, a-Methylstyrol und p-Methylstyrol genannt; in untergeordneten Anteilen (vorzugsweise nicht mehr als 20, insbesondere nicht mehr als 8 Gew.-%), können auch Comonomere wie (Meth) acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Geeignete Modifiziermittel b₃) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C1- und C₂-C₈-Alkanolen (Monomere b₃₁), die Mono- oder Diamide dieser Säuren wie N-Phenylmaleinimid (Monomere b₃₂) und Maleinhydrazid. Andere geeignete Modifizierungsmittel sind das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Als Monomere b₃₃) seien beispielsweise N-Vinylpyrrolidon und (Meth)acryloylcaprolactam genannt.

Als Radikalstarter b₄) seien genannt:
Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoryisobutyrat, 1,1-Di-tert.-butylperoxy-3,3,5-trimethylcyclohexan, tert.-Butylperoryisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur 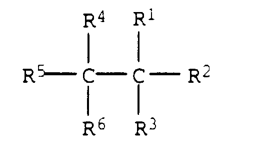 wobei R¹ bis R⁶ Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem p-Elektronensystem und Stickstoff, Sauerstoff oder Schwefel als Heteroatomen darstellen. Die Substituenten R1 bis R6 können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Als Komponente C) enthalten die erfindungsgemäßen Formmassen mindestens ein aromatisches sekundäres Amin in Mengen von 0,1 bis 2, vorzugsweise 0,3 bis 1,5 und insbesondere 0,3 bis 1 Gew.-%, gemäß der allgemeinen Formel I 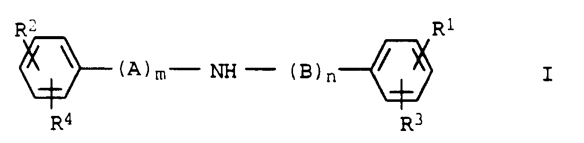 wobei
- m, n: 0 oder 1
- A und B: durch C₁-C₄-Alkyl oder Phenyl substituiertes tertiäres C-Atom
- R¹, R²: Wasserstoff oder eine C₁-C₆-Alkylgruppe in ortho- oder para-Stellung welcher gegebenenfalls substituiert sein kann durch ein bis 3 Phenylreste, Halogen, Carboxylgruppe oder ein Übergangsmetallsalz dieser Carboxylgruppe und
- R³, R⁴: Wasserstoff oder ein Methylrest in ortho- oder para-Position, wenn m plus n für 1 steht und eine tertiäre C₃-C₉-Alkylgruppe in ortho- oder para-Position, welche gegebenenfalls durch 1 bis 3 Phenylreste substituiert sein kann, wenn m plus n 0 oder 1 steht,
bedeuten.

Bevorzugte Reste A oder B sind symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 3 Phenylgruppen als Substituenten aufweisen.

Bevorzugte Reste R¹ oder R² sind para t-butyl oder tetramethylsubstituiertes n-butyl, wobei die Methylgruppen vorzugsweise durch 1 bis 3 Phenylgruppen ersetzt sein können. Bevorzugte Halogene sind Chlor und Brom.

Bevorzugte Reste R³ oder R⁴ sind für m plus n = 2 Wasserstoff, sowie für m plus n = 0 oder 1 ein t-Butylrest in ortho- oder para-Position, welcher insbesondere durch 1 bis 3 Phenylreste substituiert sein kann.

Beispiele für sekundäre aromatische Amine C) sind
4,4'-bis(α,α'-tertiäroctyl)diphenylamin
4,4'-bis(α,α'-dimethylbenzyl) diphenylamin
4,4'-bis(α-methylbenzhydryl)diphenylamin
4-(1,1,3,3-tetramethylbutyl)4'-triphenylmethyldiphenylamin
4,4'-bis(α,α-p-trimethylbenzyl)diphenylamin
2,4,4'-tris(α,α-dimethylbenzyl)diphenylamin
2,2'-dibromo-4,4'-bis(α,α-dimethylbenzyl)diphenylamin
4,4'-bis(α,α-dimethylbenzyl)-2-carboxydiphenylamine-nikkel-4,4'-bis(α,α-dimethylbenzyl)-diphenylamin
2-sec-butyl-4,4'-bis(α,α-dimethylbenzyl)diphenylamin
4,4'-bis(α,α-dimethylbenzyl)-2-(α-methylheptyl)diphenylamin
2- (α-methylpentyl)4,4'-ditrityldiphenylamin
4-α,α-dimethylbenzyl-4'-isopropoxydiphenylamin
2-(α-methylheptyl)-4'-(α,α-dimethylbenzyl)diphenylamin
2-(α-methylpentyl)-4'-trityldiphenylamin
4,4'-bis(tertiary-butyl)diphenylamin
sowie:

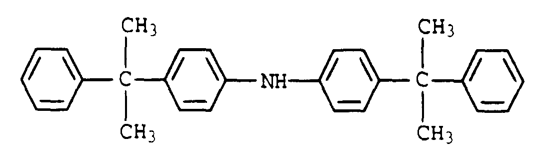

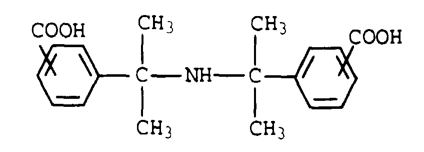

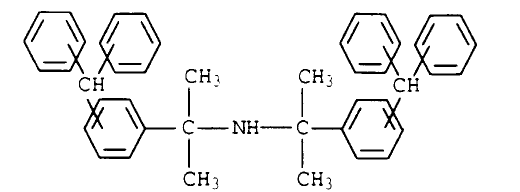

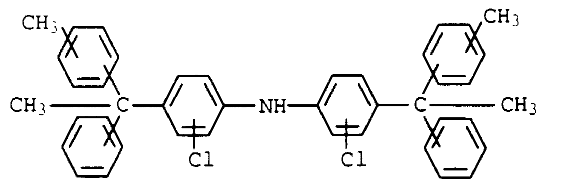

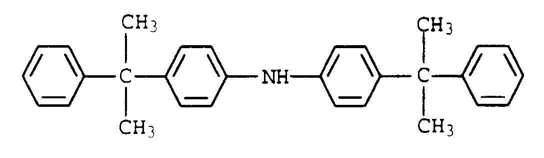

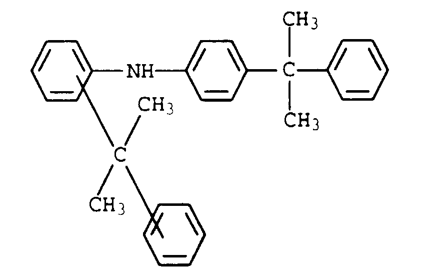

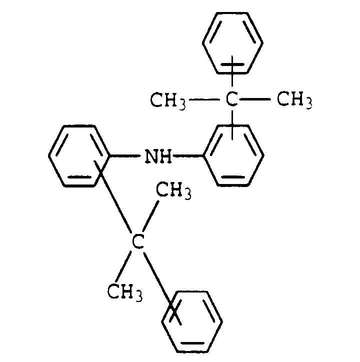

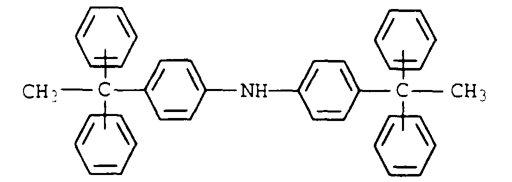

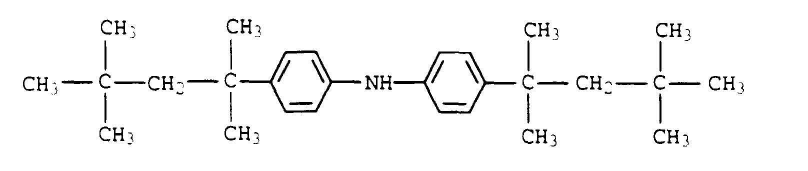

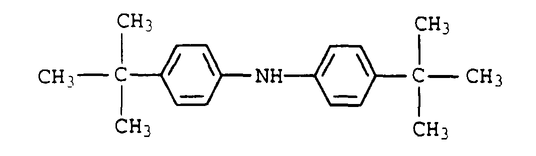

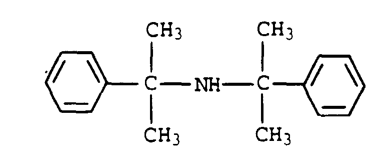

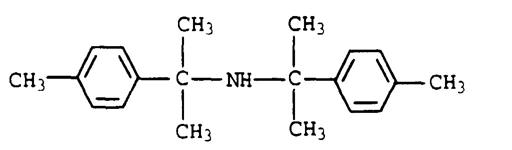

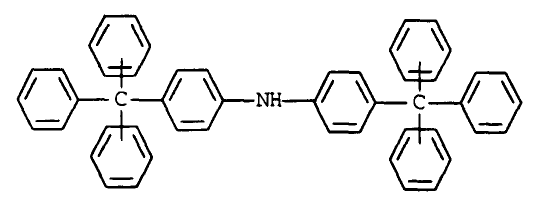

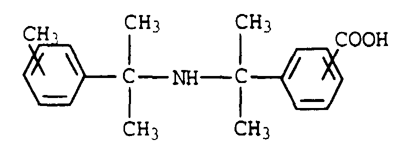

Die Herstellung erfolgt gemäß den in der BE-A 67/0500120 und CA-A 963594 beschriebenen Verfahren.

Bevorzugte sekundäre aromatische Amine sind Diphenylamin und dessen Derivate, welche als Naugard^{®} (Firma Uniroyal) im Handel erhältlich sind.

Als Komponente D) enthalten die erfindungsgemäßen Formmassen 0,001 - 0,5, bevorzugt 0,005 - 0,25 und insbesondere 0,01 - 1 Gew.-% mindestens einer phosphorhaltigen anorganischen Säure oder deren Derivate.

Bevorzugte Säuren sind hypophosphorige Säure, phosphorige Säure oder Phosphorsäure sowie deren Salze mit Alkalimetallen, wobei Natrium und Kalium besonders bevorzugt sind. Unter organischen Derivaten dieser Säuren sollen vorzugsweise Esterderivate oben genannter Säuren verstanden werden. Bevorzugte Mischungsverhältnisse der Komponenten C) und D) sind insbesondere solche, in denen das Gewichtsverhältnis der Komponente C) zum Phosphorgehalt der Komponente D) ≥ 50:1, bevorzugt ≥ 100:1. Das bevorzugte Mischungsverhältnis führt zu einer weiteren Verbesserung der mechanischen Eigenschaften.

Es können übliche Schlagzähmodifier E) verwendet werden, die für Polyamide (Komponente A) geeignet sind und Kautschuke E), die üblicherweise Polyphenylenether B) schlagzähmodifizieren.

Als Komponente E) werden die üblichen zur Verbesserung der Zähigkeit von Polyamiden oder Polyphenylenethern eingesetzten schlagzäh modifizierenden Polymeren (auch Schlagzähmodifier, Elastomere oder Kautschuke genannt) verwendet, in Mengen von 0 bis 30, bevorzugt 3 bis 20 und insbesondere 5 bis 15 Gew.-%.

Als Kautschuke, die die Zähigkeit von Polyphenylenethern erhöhen, seien z.B. folgende genannt:
Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Ferner können Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, eingesetzt werden.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, US-A 3 149 182, US-A 3 231 635 und US-A 3 462 162 verwiesen.

Bevorzugt sind Formmassen, die keine weiteren Blockcopolymere enthalten.

Auch im Handel sind entsprechende Produkte erhältlich, z.B. ein Polyoctylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®-G-Typen (Shell), die Finaprene®-Typen (Fina) und die Europrene®-SOL-TR-Typen (Enichem) genannt.
Kautschuke, die die Zähigkeit von Polyamiden erhöhen, weisen i.a. zwei wesentliche Merkmale auf: sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:
EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, a-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.%, vorzugsweise 0,25 bis 15 Gew.%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern E) sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weiteren Bestandteil können die erfindungsgemäßen Formmassen 0 bis 50, vorzugsweise 5 bis 40 und insbesondere 10 bis 35 Gew.-% eines faser- oder teilchenförmigen Füllstoffes (Komponente F) oder deren Mischungen enthalten.

Bevorzugte faserförmige Verstärkungsstoffe (Komponente F) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 mm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Die erfindungsgemäßen Formmassen können weiterhin Flammschutzmittel F) in einer Konzentration von 0 bis 20 Gew.-%, bevorzugt von 1 bis 15 Gew.-%, insbesondere 3 bis 10 Gew.-%, bezogen auf das Gesamtgewicht der Formmasse, enthalten.

Geeignete Flammschutzmittel sind z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A, der Tetrabromphthalsäure, des 2,6-Dibromphenols und 2,4,6-Tribromphenols und deren Derivate.

Bevorzugtes Flammschutzmittel G) ist elementarer Phosphor. In der Regel kann der elementare Phosphor mit z.B. Polyurethanen oder Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt sind Kombinationen von elementarem Phosphor mit 1,2,3,4,7,8,9,10,13,13,14,14-Dodecachloro-1,4,4a,5,6,6a,7,-10,10a,11,12,12a-dodecahydro-1,4:7,10-dimethanodibenzo(a,e)-cyclooctan (Dechlorane®Plus, Occidental Chemical Corp.) und gegebenenfalls einem Synergisten z.B. Antimontrioxid.

Phosphorverbindungen wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die gemäß der vorliegenden Erfindung verwendet werden können, sind solche der folgenden allgemeinen Formel 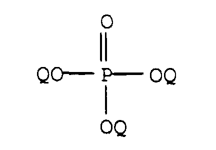 worin Q für gleiche oder verschiedene Reste Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist.

Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi(p-tolyl)phosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphornitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Neben den wesentlichen Komponenten A), B), C) und D) sowie gegebenenfalls E) bis G) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten A) bis G).

Üliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Materialien zur Erhöhung der Abschirmung gegen elektromagnetische Wellen wie Metallflocken, -pulver, -fasern, metallbeschichtete Füllstoffe können ebenfalls mitverwendet werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen können nach an sich bekannten Verfahren hergestellt werden, indem man die Ausgangskomponenten A), B), C) und D) und gegebenenfalls E), F) und G) in üblichen Mischvorrichtungen wie Schneckenextruder vorzugsweise Zweischneckenextruder, Brabender-Mühlen oder Banbury-Mühlen mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 240 bis 380°C erforderlich. Die Abmischreihenfolge der Komponenten kann variiert werden, so können zwei oder ggf. drei Komponenten vorgemischt werden, es können aber auch alle Komponenten gemeinsam gemischt werden.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die bevorzugte Morphologie der erfindungsgemäßen Formmassen ist charakterisiert durch eine Matrix, die von der Komponente A) gebildet wird und darin dispergierten Partikeln der Komponente B). Der Schlagzähmodifier D) kann sowohl in A) als auch in B), vorzugsweise jedoch in B) lokalisiert sein. Die mittlere Teilchengröße von B) (Zahlenmittel, bestimmt durch Auszählen elektronenmikroskopischer Aufnahmen) sollte unter 2, vorzugsweise unter 1 mm liegen. Eine solche Morphologie läßt sich durch geeignete Herstellbedingungen, geeignete Wahl der Mengen von A), B) und D) sowie der Molekulargewichte von A), B) und D) einstellen. Die entsprechenden Zusammenhänge sind dem Fachmann bekannt.

Die erfindungsgemäßen Formmassen zeichnen sich durch eine gute Verarbeitbarkeit aus. Daraus herstellbare Formkörper weisen ein ausgezeichnetes Gesamtspektrum der mechanischen Eigenschaften sowie eine gute Wärmealterungsbeständigkeit und Thermooxidationsbeständigkeit auf.

Infolge dieses Eigenschaftsspektrums eignen sich die aus den erfindungsgemäßen Formmassen herstellbaren Formkörper besonders für Karosserieteile und Funktionsteile im Motorbereich von Kraftfahrzeugen.

### Beispiele

Es wurden folgende Komponenten eingesetzt:

### Komponente A

Polyamid 66 mit einem Zahlenmittel des Molekulargewichts von 22 000 g/mol (Ultramid® A3 der BASF AG);
relative Viskosität ηᵣₑₗ: 2,6 (gemessen als 1 gew.-%ige Lösung in konzentrierter H₂SO₄ bei 25°C).

### Komponente B

90 Gew.-% Poly-2,6-dimethyl-1,6-dimethylphenylenther mit einer reduzierten spezifischen Viskosität von 0,6 dl/g (1 gew.-%ig in Chloroform bei 25°C),
8 Gew.-% Polystyrol (MFI bei 200°C/5 kg Belastung = 24 g/10 min),
1,95 Gew.-% Fumarsäure und
0,05 Gew.-% 3,4-Dimethyl-3,4-diphenylhexan
wurden in einem Zweischneckenextruder (ZSK 30, Fa. Werner+Pfleiderer) dosiert, in einem ersten Teil unter Verwendung von Knetelementen bei 270°C aufgeschmolzen, in einem zweiten Teil unter Kneten und Verwendung von Knetelementen bei 280°C umgesetzt und anschließend in einer Entgasungszone bei 300°C im Vakuum entgast. Die mittlere Verweilzeit im Extruder betrug 1,5 min.

### Komponente C)

4,4'-Bis(α,α-dimethylbenzyl)diphenylamin (Naugard® 445 der Firma Uniroyal).

### Komponente D1)

Na-Hypophosphit NaH₂PO₂ x 5 H₂O der Firma Merck, Darmstadt

### Komponente D2)

Na-Phosphit NaH₂PO₃ x 12 H₂O

### Komponente E)

Styrol-Butadien-Vierblockcopolymer mit einem Styrolgehalt von 41 Gew.-% und einer Härte nach Shore A (DIN 53505) von 87 (Tufprene® A der Firma Asahi Chem., Jp.).

### Herstellung der Formmassen

Die Komponenten A) bis E) wurden bei 280°C auf einem Zweischneckenextruder gemischt und zu einer homogenen Schmelze verarbeitet (ZSK 30, mit einem Durchsatz von 20 kg/h, Drehzahl 200 U/min). Die Polymerschmelze wurde entgast und extrudiert, durch ein Wasserbad geleitet, granuliert und getrocknet.

Anschließend wurde das getrocknete Granulat bei 280°C zu Normprüfkörpern gespritzt (Rundscheiben 60 x 2 mm).

Die Bestimmung der Stabilität erfolgte durch Wärmelagerung der Prüfkörper bei 110°C in Luft und anschließender Bestimmung der Durchstoßarbeit nach DIN 53443 in Abhängigkeit von der Lagerdauer. Aus diesen Kurven wurde als Meßgröße für die Effektivität des Stabilisatorsystems die Anzahl an Tagen (Lagerdauer) bestimmt, nach der die Durchstoßarbeit W_{ges} unter 50 % des Ausgangswertes abgesunken war.

Die Zusammensetzungen der Formmassen und die Ergebnisse der Messungen sind der Tabelle zu entnehmen.

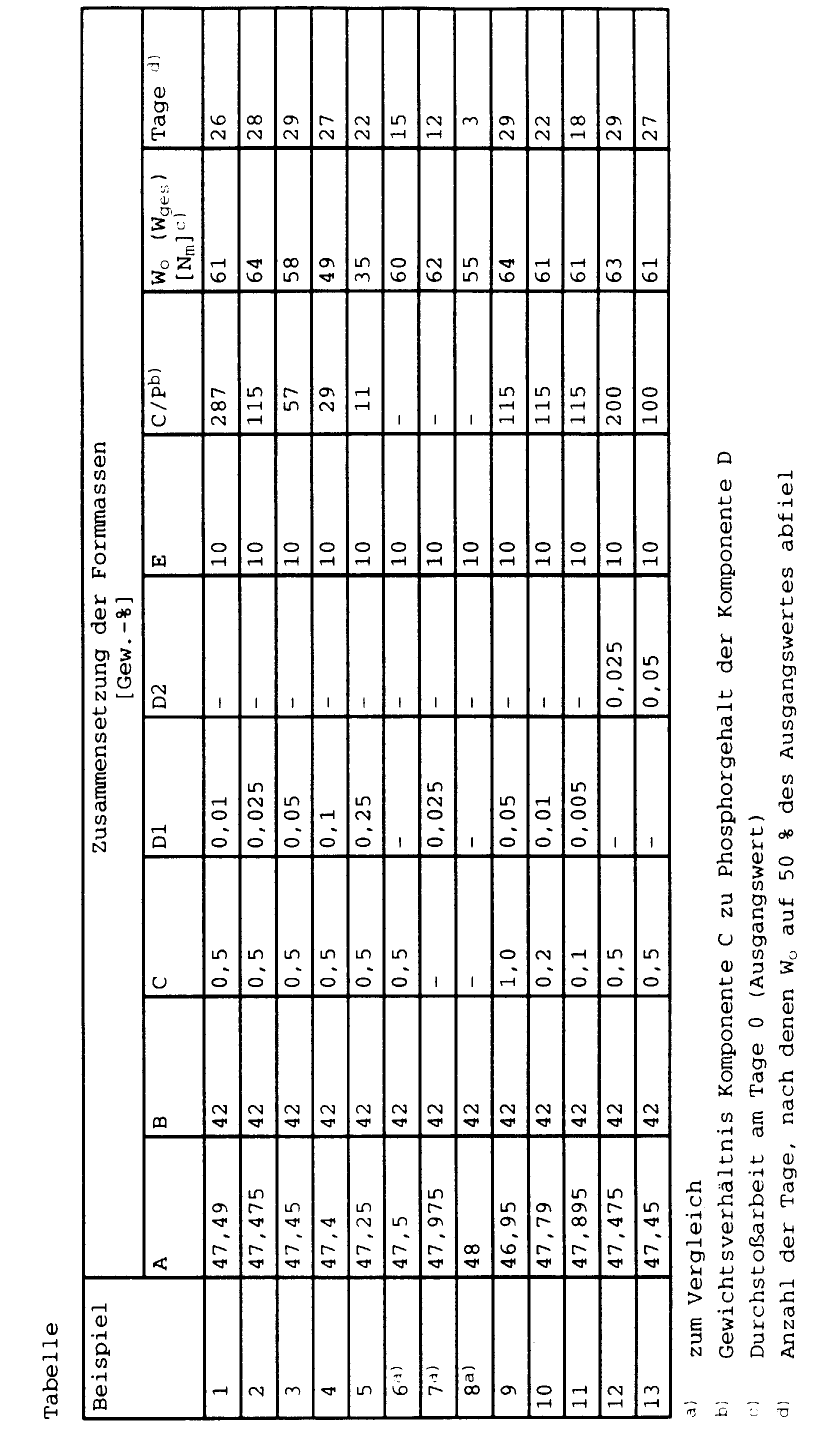

## Patentansprüche (Patentansprüche für folgende(n) Vertragsstaat(en): DE, GB, FR, NL, BE)

1. Thermoplastische Formmassen, enthaltend
A) 15 - 84 Gew.-% eines thermoplastischen Polyamids
B) 15 - 84 Gew.-% eines durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifizierten Polyphenylenethers
C) 0,1 - 2 Gew.-% mindestens eines aromatischen, sekundären Amins,
D) 0,001 - 0,5 Gew.-% mindestens einer phosphorhaltigen anorganischen Säure oder deren Derivate,
E) 0 - 30 Gew.-% eines schlagzähmodifizierenden Polymeren
F) 0 - 50 Gew.-% eines faser- oder teilchenförmigen Füllstoffes oder deren Mischungen
G) 0 - 20 Gew.-% eines Flammschutzmittels.

2. Thermoplastische Formmassen nach Anspruch 1, wobei die Komponente B) bis zu 50 Gew.-%, bezogen auf B), durch ein vinylaromatisches Polymer ersetzt ist.

3. Thermoplastische Formmassen nach den Ansprüchen 1 und 2, in denen die Komponente D) aus hypophosphoriger Säure, phosphoriger Säure, Phosphorsäure deren Alkalimetallsalzen oder deren Mischungen aufgebaut ist.

4. Thermoplastische Formmassen nach den Ansprüchen 1 bis 3, in denen das Gewichtsverhältnis der Komponente C) zum Phosphorgehalt der Komponente D) ≥ 50:1 ist.

5. Thermoplastische Formmassen nach den Ansprüchen 1 bis 4, enthaltend als Komponente C) ein aromatisches sekundäres Amin der allgemeinen Formel I
wobei
m, n 0 oder 1
A und B durch C₁-C₄-Alkyl oder Phenyl substituiertes tertiäres C-Atom
R¹, R² Wasserstoff oder eine C₁-C₆-Alkylgruppe in ortho- oder para-Stellung welcher gegebenenfalls substituiert sein kann durch ein bis 3 Phenylreste, Halogen, Carboxylgruppe oder ein Übergangsmetallsalz dieser Carboxylgruppe und
R³, R⁴ Wasserstoff oder ein Methylrest in ortho- oder para-Position, wenn m plus n für 1 steht und eine tertiäre C₃-C₉-Alkylqruppe in ortho- oder para-Position, welche gegebenenfalls durch 1 bis 3 Phenylreste substituiert sein kann, wenn m plus n 0 oder 1 steht,
bedeuten.

6. Verwendung der thermoplastischen Formmassen gemäß den Ansprüchen 1 bis 5 zur Herstellung von Folien, Fasern und Formkörpern.

7. Formkörper, erhältlich aus den thermoplastischen Formmassen gemäß den Ansprüchen 1 bis 5.

## Patentansprüche (Patentansprüche für folgende(n) Vertragsstaat(en): ES)

1. Thermoplastische Formmassen, enthaltend
A) 15 - 84 Gew.-% eines thermoplastischen Polyamids
B) 15 - 84 Gew.-% eines Polyphenylenethers
C) 0,1 - 2 Gew.-% mindestens eines aromatischen, sekundären Amins,
D) 0,001 - 0,5 Gew.-% mindestens einer phosphorhaltigen anorganischen Säure oder deren Derivate,
E) 0 - 30 Gew.-% eines schlagzähmodifizierenden Polymeren
F) 0 - 50 Gew.-% eines faser- oder teilchenförmigen Füllstoffes oder deren Mischungen
G) 0 - 20 Gew.-% eines Flammschutzmittels.

2. Thermoplastische Formmassen nach Anspruch 1, wobei die Komponente B) bis zu 50 Gew.-%, bezogen auf B), durch ein vinylaromatisches Polymer ersetzt ist.

3. Thermoplastische Formmassen nach den Ansprüchen 1 und 2, in denen die Komponente D) aus hypophosphoriger Säure, phosphoriger Säure, Phosphorsäure deren Alkalimetallsalzen oder deren Mischungen aufgebaut ist.

4. Thermoplastische Formmassen nach den Ansprüchen 1 bis 3, in denen das Gewichtsverhältnis der Komponente C) zum Phosphorgehalt der Komponente D) ≥ 50:1 ist.

5. Thermoplastische Formmassen nach den Ansprüchen 1 bis 4, enthaltend als Komponente C) ein aromatisches sekundäres Amin der allgemeinen Formel I
wobei
m, n 0 oder 1
A und B durch C₁-C₄-Alkyl oder Phenyl substituiertes tertiäres C-Atom
R¹, R² Wasserstoff oder eine C₁-C₆-Alkylgruppe in ortho- oder para-Stellung welcher gegebenenfalls substituiert sein kann durch ein bis 3 Phenylreste, Halogen, Carboxylgruppe oder ein Übergangsmetallsalz dieser Carboxylgruppe und
R³, R⁴ Wasserstoff oder ein Methylrest in ortho- oder para-Position, wenn m plus n für 1 steht und eine tertiäre C₃-C₉-Alkylgruppe in ortho- oder para-Position, welche gegebenenfalls durch 1 bis 3 Phenylreste substituiert sein kann, wenn m plus n 0 oder 1 steht,
bedeuten.

6. Verwendung der thermoplastischen Formmassen gemäß den Ansprüchen 1 bis 5 zur Herstellung von Folien, Fasern und Formkörpern.

7. Formkörper, erhältlich aus den thermoplastischen Formmassen gemäß den Ansprüchen 1 bis 5.

## Claims (Claims for the following Contracting State(s): DE, GB, FR, NL, BE)

1. A thermoplastic molding material containing
A) 15 - 84% by weight of a thermoplastic polyamide,
B) 15 - 84% by weight of a polyphenylene ether modified by incorporating at least one carbonyl, carboxyl, anhydride, amido, imido, carboxylic ester, carboxylate, amino, hydroxyl, epoxy, oxazoline, urethane, urea, lactam or halobenzyl group,
C) 0.1 - 2% by weight of at least one aromatic, secondary amine,
D) 0.001 - 0.5% by weight of at least one phosphorus-containing inorganic acid or a derivative thereof,
E) 0 - 30% by weight of a polymeric impact modifier,
F) 0 - 50% by weight of a fibrous or particulate filler or a mixture thereof and
G) 0 - 20% by weight of a flameproofing agent.

2. A thermoplastic molding material as claimed in claim 1, wherein up to 50% by weight, based on B), of the component B) are replaced by a vinylaromatic polymer.

3. A thermoplastic molding material as claimed in claims 1 and 2, in which the component D) is composed of hypophosphorous acid, phosphorous acid, phosphoric acid, an alkali metal salt thereof or a mixture thereof.

4. A thermoplastic molding material as claimed in any of claims 1 to 3, in which the weight ratio of component C) to the phosphorus content of component D) is ≥ 50:1.

5. A thermoplastic molding material as claimed in any of claims 1 to 4, containing, as component C), an aromatic secondary amine of the formula I
where
m and n are each 0 or 1,
A and B are each a tertiary carbon atom substituted by C₁-C₄-alkyl or by phenyl,
R¹ and R² are each hydrogen or C₁-C₆-alkyl in the ortho or para position which may be substituted by from 1 to 3 phenyl radicals, halogen, carboxyl or a transition metal salt of this carboxyl group and
R³ and R⁴ are each hydrogen or methyl in the ortho or para position, when m plus n is 1, and tertiary C₃-C₉-alkyl in the ortho or para position which may be substituted by from 1 to 3 phenyl radicals, when m plus n is 0 or 1.

6. Use of a thermoplastic molding material as claimed in any of claims 1 to 5 for the production of films, fibers and moldings.

7. A molding obtainable from a thermoplastic molding material as claimed in any of claims 1 to 5.

## Claims (Claims for the following Contracting State(s): ES)

1. A thermoplastic molding material containing
A) 15 - 84% by weight of a thermoplastic polyamide,
B) 15 - 84% by weight of a polyphenylene ether,
C) 0.1 - 2% by weight of at least one aromatic, secondary amine,
D) 0.001 - 0.5% by weight of at least one phosphorus-containing inorganic acid or a derivative thereof,
E) 0 - 30% by weight of a polymeric impact modifier,
F) 0 - 50% by weight of a fibrous or particulate filler or a mixture thereof and
G) 0 - 20% by weight of a flameproofing agent.

2. A thermoplastic molding material as claimed in claim 1, wherein up to 50% by weight, based on B), of the component B) are replaced by a vinylaromatic polymer.

3. A thermoplastic molding material as claimed in claims 1 and 2, in which the component D) is composed of hypophosphorous acid, phosphorous acid, phosphoric acid, an alkali metal salt thereof or a mixture thereof.

4. A thermoplastic molding material as claimed in any of claims 1 to 3, in which the weight ratio of component C) to the phosphorus content of component D) is ≥ 50:1.

5. A thermoplastic molding material as claimed in any of claims 1 to 4, containing, as component C), an aromatic secondary amine of the formula I
where
m and n are each 0 or 1,
A and B are each a tertiary carbon atom substituted by C₁-C₄-alkyl or by phenyl,
R¹ and R² are each hydrogen or C₁-C₆-alkyl in the ortho or para position which may be substituted by from 1 to 3 phenyl radicals, halogen, carboxyl or a transition metal salt of this carboxyl group and
R³ and R⁴ are each hydrogen or methyl in the ortho or para position, when m plus n is 1, and tertiary C₃-C₉-alkyl in the ortho or para position which may be substituted by from 1 to 3 phenyl radicals, when m plus n is 0 or 1.

6. Use of a thermoplastic molding material as claimed in any of claims 1 to 5 for the production of films, fibers and moldings.

7. A molding obtainable from a thermoplastic molding material as claimed in any of claims 1 to 5.

## Revendications (Revendications pour l'(les) Etat(s) contractant(s) suivant(s): DE, GB, FR, NL, BE)

1. Masses à mouler thermoplastiques contenant
A) 15 - 84% en poids d'un polyamide thermoplastique,
B) 15 - 84% en poids d'un éther de polyphénylène modifié par incorporation d'au moins un groupe carbonyle, un groupe d'acide carboxylique, un groupe d'anhydride d'acide, un groupe d'amide d'acide, un groupe d'imide d'acide, un groupe d'ester carboxylique, un groupe carboxylate, un groupe amino, un groupe hydroxyle, un groupe époxy, un groupe oxazoline, un groupe uréthane, un groupe urée, un groupe lactame ou un groupe halogénobenzyle,
C) 0,1 - 2% en poids d'au moins une amine aromatique secondaire,
D) 0,001 - 0,5% en poids d'au moins un acide inorganique phosphoré ou de ses dérivés,
E) 0 - 30% en poids d'un polymère procurant une modification à résistance aux chocs,
F) 0 - 50% en poids d'une matière de remplissage fibreuse ou particulaire ou encore de ses mélanges,
G) 0 - 20% en poids d'un agent ignifuge.

2. Masses à mouler thermoplastiques selon la revendication 1, dans lesquelles le composant B) est remplacé, à concurrence de 50% en poids rapportés à B), par un polymère vinylaromatique.

3. Masses à mouler thermoplastiques selon les revendications 1 et 2, dans lesquelles le composant B) est constitué par l'acide hypophosphoreux, l'acide phosphoreux, l'acide phosphorique, leurs sels de métaux alcalins ou leurs mélanges.

4. Masses à mouler thermoplastiques selon les revendications 1 à 3, dans lesquelles le rapport pondéral du composant C) à la teneur en phosphore du composant D) est ≥ 50:1.

5. Masses à mouler thermoplastiques selon l'une des revendications 1 à 4, contenant comme composant C) une amine secondaire aromatique répondant à la formule générale I
dans laquelle
m, n représentent 0 ou 1,
A et B représentent un atome de carbone tertiaire substitué par un groupe alkyle en C₁-C₄ ou par un groupe phényle,
R¹, R² représentent un atome d'hydrogène, un groupe alkyle en C₁-C₆ en position ortho ou para qui peut éventuellement être substitué par 1 à 3 radicaux phényle, par un atome d'halogène, par un groupe carboxyle ou par un sel de métal transitoire de ce groupe carboxyle, et
R³, R⁴ représentent un atome d'hydrogène ou un radical méthyle en position ortho ou para, lorsque m + n représentent 1, et un groupe alkyle tertiaire en C₃-C₉ en position ortho ou para, qui peut éventuellement être substitué par 1 à 3 radicaux phényle, lorsque m + n représentent 0 ou 1.

6. Utilisation des masses à mouler thermoplastiques selon l'une des revendications 1 à 5, pour la préparation de feuilles, de fibres et de corps moulés.

7. Corps moulé que l'on obtient à partir des masses à mouler thermoplastiques selon l'une des revendications 1 à 5.

## Revendications (Revendications pour l'(les) Etat(s) contractant(s) suivant(s): ES)

1. Masses à mouler thermoplastiques contenant
A) 15 - 84% en poids d'un polyamide thermoplastique,
B) 15 - 84% en poids d'un éther de polyphénylène,
C) 0,1 - 2% en poids d'au moins une amine aromatique secondaire,
D) 0,001 - 0,5% en poids d'au moins un acide inorganique phosphoré ou de ses dérivés,
E) 0 - 30% en poids d'un polymère procurant une modification à résistance aux chocs,
F) 0 - 50% en poids d'une matière de remplissage fibreuse ou particulaire ou encore de leurs mélanges,
G) 0 - 20% en poids d'un agent ignifuge.

2. Masses à mouler thermoplastiques selon la revendication 1, dans lesquelles le composant B) est remplacé, à concurrence de 50% en poids rapportés à B), par un polymère vinylaromatique.

3. Masses à mouler thermoplastiques selon les revendications 1 et 2, dans lesquelles le composant B) est constitué par l'acide hypophosphoreux, l'acide phosphoreux, l'acide phosphorique, leurs sels de métaux alcalins ou leurs mélanges.

4. Masses à mouler thermoplastiques selon les revendications 1 à 3, dans lesquelles le rapport pondéral du composant C) à la teneur en phosphore du composant D) est ≥ 50:1.

5. Masses à mouler thermoplastiques selon l'une des revendications 1 à 4, contenant comme composant C) une amine secondaire aromatique répondant à la formule générale I
dans laquelle
m, n représentent 0 ou 1,
A et B représentent un atome de carbone tertiaire substitué par un groupe alkyle en C₁-C₄ ou par un groupe phényle,
R¹, R² représentent un atome d'hydrogène, un groupe alkyle en C₁-C₆ en position ortho ou para qui peut éventuellement être substitué par 1 à 3 radicaux phényle, par un atome d'halogène, par un groupe carboxyle ou par un sel de métal transitoire de ce groupe carboxyle, et
R³, R⁴ représentent un atome d'hydrogène ou un radical méthyle en position ortho ou para, lorsque m + n représentent 1, et un groupe alkyle tertiaire en C₃-C₉ en position ortho ou para, qui peut éventuellement être substitué par 1 à 3 radicaux phényle, lorsque m + n représentent 0 ou 1.

6. Utilisation des masses à mouler thermoplastiques selon l'une des revendications 1 à 5, pour la préparation de feuilles, de fibres et de corps moulés.

7. Corps moulé que l'on obtient à partir des masses à mouler thermoplastiques selon l'une des revendications 1 à 5.
